# EUROPÄISCHE PATENTSCHRIFT

(11) **EP 0 685 253 B1**
(45) Veröffentlichungstag und Bekanntmachung des Hinweises auf die Patenterteilung: **05.12.2001**
(21) Anmeldenummer: 95106950.9
(22) Anmeldetag: 09.05.1995
(51) Int. Cl.: B01D 53/94, B01J 23/00, B01J 23/80

(54) **Katalysator, Verfahren zu dessen Herstellung und Verwendung desselben**
Catalyst, process for its preparation and its use
Catalyseur, procédé de sa préparation et son utilisation

(30) Priorität: 03.06.1994 DE 4419486
(43) Veröffentlichungstag der Anmeldung: 06.12.1995
(73) Patentinhaber: DaimlerChrysler AG, 70567 Stuttgart (DE)
(72) Erfinder: Hartweg, Martin, Dr., D-89153 Erbach (DE); Heinau, Martina, D-89075 Ulm (DE); Seibold, Andrea, D-89134 Blaustein-Arnegg (DE); Walz, Leonhard, Dr., D-76437 Rastatt (DE)

(56) Entgegenhaltungen:
- EP-A- 0 196 768
- EP-A- 0 210 681
- EP-A- 0 395 471
- WO-A-87/06157
- US-A- 3 904 553
- US-A- 4 274 981

## Beschreibung

Die Erfindung betrifft einen Katalysator gemäß dem Oberbegriff des Anspruchs 1 sowie ein Verfahren zu dessen Herstellung gemäß dem Oberbegriff des Anspruchs 12, wie beides aus der gattungsgemäß zugrundegelegten DE 43 01 470 A1 als bekannt hervorgeht.

Aus der nicht vorveröffentlichten DE 43 01 470 A1 ist ein CuAl₂O₄-Spinell bekannt, das unter Zusatz von Zinn, Blei, einem Element der II. Haupt- oder Nebengruppe des Periodensystems der Element als Oxid oder Salz oder in elementarer Form und anschließendem Calzinieren zu einem Spinell vereinigt wird. Das derart vorbekannte Spinell wird zur Zersetzung von N₂O eingesetzt. Die Verwendung dieses Katalysators hinsichtlich einer katalytischen Oxidation von CO₂ und NOx, insbesondere bei Temperaturen von mehreren 100 °C ist nicht bekannt.

Aus Gründen des Umweltschutzes ist die Reinigung von Gasen, insbesondere von Abgasen, wie sie bspw. bei Verbrennungsmotoren und hier vor allem bei Diesel- oder Magermixmotoren anfallen, neben der Verringerung von CO u.a. deren Entstickung, also der Abbau von Stickoxiden (NOx) ein vordringliches Problem.

Aus der EP 042 471 B1 ist ein zur katalytischen Oxidation von Kohlenmonoxid (CO) zu Kohlendioxid (CO₂) verwandter Katalysator bekannt, der die Metalle Kupfer (Cu), Zink (Zn) und Aluminium (Al) als Metalloxide aufweist. Zumindest 60% des vorhandenen Cu ist an das Al-Oxid als Kupferoxid-Aluminiumoxid-Spinell gebunden. In den Freiräumen des porösen Spinells ist Zn-Oxid mit einem Gewichtsanteil zwischen 1% bis 20% angeordnet.

Von dem aus der EP 042 471 B1 vorbekannten Katalysator ist allerdings nur seine reinigende Wirkung bzgl. des CO's bekannt, die auf einer katalytischen Oxidation des CO's beruht. Ob der Katalysator gleichfalls zur Reinigung von NOx und/oder Kohlenwasserstoffen aufweisenden Gasen, wie sie insbesondere bei den obengenannten Brennkraftmaschinen und bspw. auch in Verbrennungskraftwerken und dgl. anfallen, geeignet ist, ist nicht bekannt.

Aus der EP-A-395471 ist ein Katalysator zur Herstellung von Methanol bzw. einfachen Alkoholen aus Kohlenmonoxid (CO), Kohlendioxid (CO₂) und Wasserstoff (H₂) bekannt. Für die Reduktion von Kohlenwasserstoffen erscheint dieser Katalysator daher ungeeignet. Ferner ist der Entgegenhaltung bezüglich der Verringerung von NOₓ ebenfalls nichts entnehmbar.

Die Aufgabe der Erfindung ist es, den gattungsgemäß zugrundegelegte Katalysator dahingehend weiterzuentwickeln, daß bei einer möglichst guten Stabilität gegenüber den Bestandteilen von Abgasen ist eine gute Reinigungswirkung, insbesondere bei NOx aufweist.

Die Aufgabe wird bei einem zugrundegelegten Katalysator erfindungsgemäß durch die kennzeichnenden Merkmale des Anspruchs 1 bzw. bei einem zugrundegelegten Verfahren mit den kennzeichnenden Verfahrensschritte des Anspruchs 12 gelöst. Durch die Verwendung eines Cu_{A}Co_{B}Zn_{C}Al_{D}O₄-Spinells und einem zeolithischen Trägermaterial als Katalysator ist der Katalysator gegenüber den Bestandteilen der Abgase wie bspw. H₂O, NOx, CO₂ und/oder SO₂ weitgehend stabil, wobei er auf Kohlenwasserstoffe oxidierend und auf das NOx katalytisch reduzierend wirkt. Die Reduktion von NOx findet in sauerstoffhaltigem Gas und in Anwesenheit von Reduktionsmitteln, wie z.B. eben genannten Kohlenwasserstoffen statt. Vorteilhafterweise liegen Kohlenwasserstoffe in Abgasen von Verbrennungsmotoren in genügender Konzentration vor. In günstigen Fällen können bei Temperaturen oberhalb 300 °C Reduktionsraten über 60 % erreicht werden.

Zweckmäßige Ausgestaltungen der Erfindung sind den Unteransprüchen entnehmbar. Im übrigen wird die Erfindung anhand von Ausführungsbeispielen, deren Meßdiagramme in den Figuren dargestellt sind, beschrieben.

Dabei zeigt
- Fig. 1: ein Diagramm einer NOx(NO)-Reduktion über der Temperatur bei einem ein Cu_{0.5}Zn_{0.5}Al₂O₄-Spinell und ein zeolithisches Trägermaterial aufweisenden Katalysator und
- Fig. 2: ein Diagramm einer NOx(NO)-Reduktion und einer Oxidation von Kohlenwasserstoffen über der Temperatur bei einem ein Cu_{0.25}Co_{0.25}Zn_{0.5}Al₂O₄-Spinell und ein zeolithisches Trägermaterial aufweisenden Katalysator.

### Beispiel 1)

Als pulvriges Spinell wird ein Kupfer/Zink/Aluminium-Spinell der Zusammensetzung Cu_{0.5}Zn_{0.5}Al₂O₄ verwandt, das mit pulverförmig vorliegendem Zeolith, und hierbei H-Mordenit, im Gewichtsverhältnis 10:90 innig vermischt und verrieben wird. Sinnvolle Resultate ergeben sich auch bei einem Mischungsverhältnis von 20: 80 oder auch 30:70. Von der obigen aus dem Metalloxid und dem Trägermaterial gebildeten Mischung werden 6,5 Gramm Pulver in einem senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch das Katalysator wird ein Gasgemisch hindurchgeleitet, das aus 1000 ppm NO, 1000 ppm Propen, 10% Sauerstoff und dem Rest Argon als Trägergas besteht. Hinter dem Reaktor wird die NO-Konzentration mit einem Gasdetektor gemessen, wobei vor der Detektion eventuell gebildetes NO₂ in einem Konverter zu NO reduziert wird. Simultan wird deine Oxidation von Kohlenwasserstoffen zu CO₂ durch Messung des CO₂-Gehaltes durch den Gasdetektor beobachtet. Die Untersuchungen dieses Katalysators ergab wie bei allen erfindungsgemäßen Katalysatoren eine hohe Beständigkeit.

Günstigerweise ist in angegebenen Temperaturintervall, das in etwa den Temperaturen entspricht, die in einem Abgasstrang eines Auspuffes einer Verbrennungsmaschine auftreten können, die Reduktionsrate deutlich höher als die des reinen Spinells. Reiner H-Mordenit hingegen führt unter vergleichbaren Bedingungen zu keiner nennenswerten NOx-Reduktion. In neuartiger und erfinderischer Weise wird dieses unerwartete Ergebnis nur bei einer Kombination gemäß Anspruch 1 erreicht.

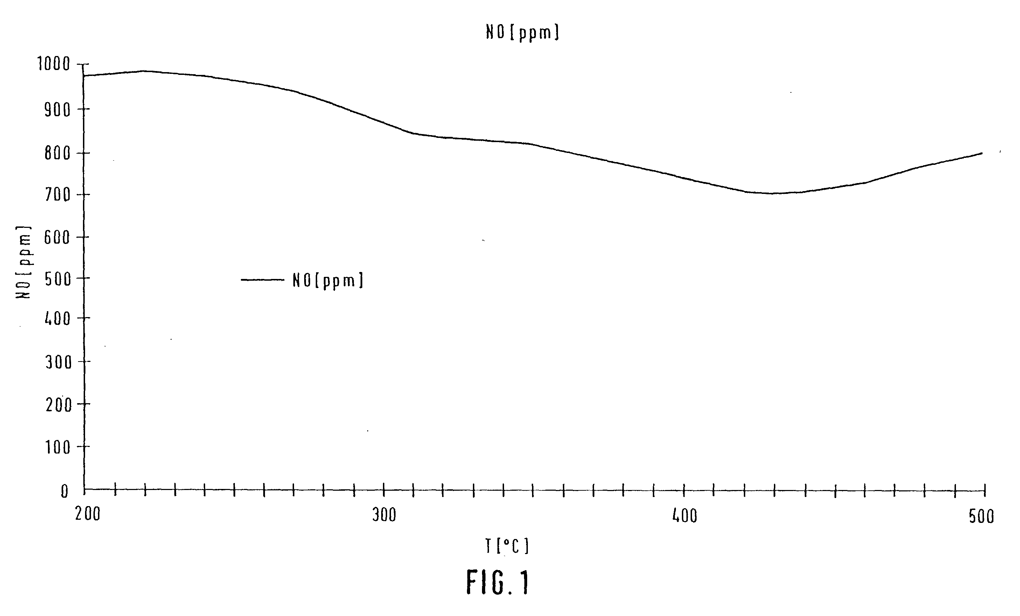

Der Verlauf des NO-Anteiles in ppm ist als Diagramm in der Figur 1 als Funktion der Temperatur dargestellt, wobei sich eine deutliche Abnahme der NO-Konzentration mit zunehmender Temperatur erkennen läßt, die bei ca. 430 °C einen Tiefpunkt erreicht.

### Beispiel 2)

Als pulvriges Spinell wird ein Kupfer/Kobalt/Zink/Aluminium-Spinell der Zusammensetzung Cu_{0.25}Co_{0.25}Zn_{0.5}Al₂O₄ verwandt, das mit pulverförmig vorliegendem Zeolith, und hierbei H-Mordenit, im Gewichtsverhältnis 10:90 innig vermischt und verrieben wird. Von dem Spinell werden 10 Gramm Pulver in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind. Durch die Substitution von Co wird bei dem Spinell insbesondere eine höhere Resistenz gegenüber H₂O erreicht.

Durch den Katalysator wird ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht. Hinter dem Reaktor wird die NO-Konzentration mit einem Gasdetektor gemessen, wobei vor der Detektion eventuell gebildetes NO₂ in einem Konverter zu NO reduziert wird. Simultan wird eine Oxidation von Kohlenwasserstoffen zu CO₂ durch Messung des CO₂-Gehaltes durch den Gasdetektor beobachtet.

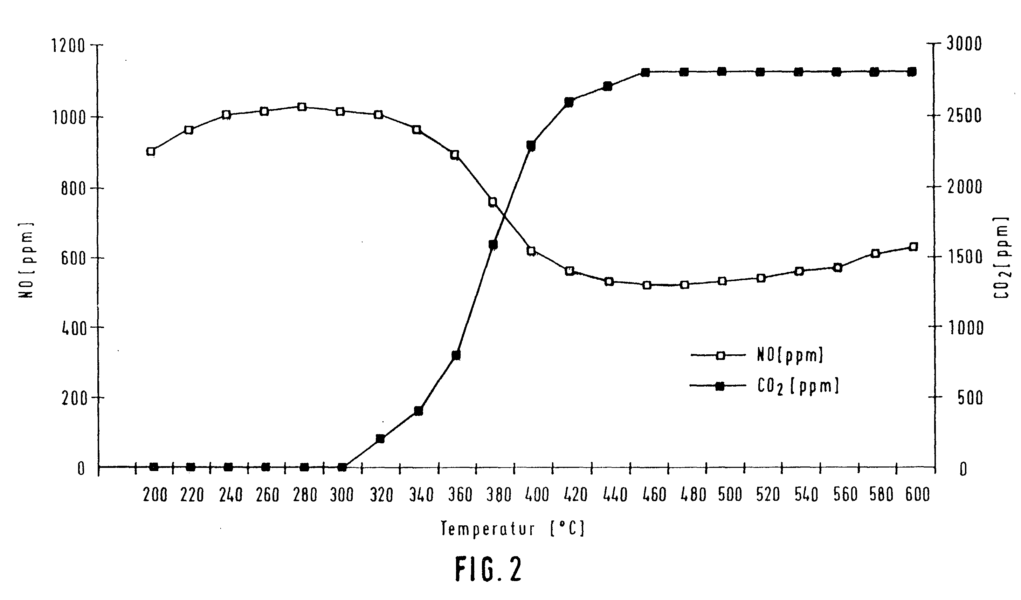

Das Ergebnis der Messung ist in Figur 2 in einem Diagramm dargestellt. Der Verlauf des NO- und des CO₂-Anteils in ppm ist als Funktion der Temperatur aufgetragen, wobei die NOx-Konzentration und die CO₂-Konzentration unterschiedlich gekennzeichnet sind.

In dem Diagramm ist eine deutliche Abnahme der NO-Konzentration mit zunehmender Temperatur erkennbar, die bei ca. 460 °C einen Tiefpunkt erreicht und anschließend wieder ansteigt. Für das Cu_{0.25}Co_{0.25}Zn_{0.5}Al₂O₄ wird ab ca. 200 °C eine drastische Abnahme der NOx-Konzentration beobachtet, wobei gleichzeitig die Kohlenwasserstoffe zu CO₂ umgesetzt werden, wie es sich an der Zunahme der CO₂-Konzentration zeigt. Das Temperaturfenster, in dem eine Reduktion des NOxs vorliegt, beträgt je nach Zusammensetzung des Materials zwischen 200 °C und 500 °C.

Günstigerweise liegt das angegebene Temperaturintervall bei etwa den Temperaturen, die in einem Abgasstrang eines Auspuffes einer Verbrennungskraftmaschine auftreten können.

Weitere Untersuchungen an diesem Katalysator ergaben eine hohe Beständigkeit gegenüber NOx, H₂O, CO₂ und H₂O.

## Patentansprüche

1. Katalysator zur katalytischen Reduktion von NOx und/oder zur Oxidation von Kohlenwasserstoffen in Abgasen, wobei der Katalysator ein Trägermaterial aus Zeolith aufweist, welcher mit einem Spinell der allgemeinen chemischen Formel
Cu_{A}Co_{B}Zn_{C}Al_{D}O₄
vermischt ist, wobei gilt:
A + B + C + D = 3 und A > 0 , B ≥ 0 , C > 0 und D > 0.

2. Katalysator nach Anspruch 1,
**dadurch gekennzeichnet,**
**daß** der Katalysator ein Kupferoxid-Zinkoxid-Aluminiumoxid-Spinell der chemischen Formel
Cu_{A}Zn_{c}Al_{D}O₄
aufweist, wobei gilt:
A + C + D = 3 und A > 0, C > 0, und D > 0.

3. Katalysator nach Anspruch 1,
**dadurch gekennzeichnet,**
**daß** der Katalysator ein Kupferoxid-Zinkoxid-Aluminiumoxid-Spinell der chemischen Formel
Cu (_{1-c}) Zn_{c}Al₂O₄
aufweist, wobei gilt: 0 < C < 1.

4. Katalysator nach Anspruch 1,
**dadurch gekennzeichnet,**
**daß** der Katalysator ein Kupferoxid-Zinkoxid-Aluminiumoxid-Spinell mit der chemischen Formel
Cu_{0.5}Zn_{0.5}Al₂O₄
aufweist.

5. Katalysator nach Anspruch 1,
**dadurch gekennzeichnet,**
**daß** der Spinell des Katalysators ein Kupferoxid-Kobaltoxid-Zinkoxid-Aluminiumoxid-Spinell der chemischen Formel
Cu_{A}Co_{B}Zn_{C}Al_{D}O₄
ist, wobei gilt: A + B + C + D = 3 mit
A > 0, B > 0, C > 0 und D > 0.

6. Katalysator nach Anspruch 1,
**dadurch gekennzeichnet,**
**daß** der Katalysator ein Kupferoxid-Kobaltoxid-Zinkoxid-Aluminiumoxid-Spinell mit der chemischen Formel
Cu_{[1-(B+C)]}Co_{B}Zn_{C}Al₂O₄
aufweist, wobei gilt: 0 < (B+C) < 1 mit B>0 und C>0.

7. Katalysator nach Anspruch 1,
**dadurch gekennzeichnet,**
**daß** der Katalysator ein Kupferoxid-Kobaltoxid-Zinkoxid-Aluminiumoxid-Spinell mit der chemischen Formel
Cu_{(0.5-B)}Co_{B}Zn_{0.5}Al₂O₄
aufweist, wobei gilt: 0 < B < 0.5

8. Katalysator nach Anspruch 1,
**dadurch gekennzeichnet,**
**daß** der Katalysator ein Kupferoxid-Kobaltoxid-Zinkoxid-Aluminiumoxid-Spinell mit der chemischen Formel
Cu_{0.25}Co_{0.25}Zn_{0.5}Al₂O₄
aufweist.

9. Katalysator nach Anspruch 1,
**dadurch gekennzeichnet,**
**daß** das Spinell in körniger, insbesondere in pulvriger Form vorliegt.

10. Katalysator nach Anspruch 1,
**dadurch gekennzeichnet,**
**daß** der Katalysator porös ausgebildet ist.

11. Katalysator nach Anspruch 1,
**dadurch gekennzeichnet,**
**daß** der prozentuale Anteil der Metalloxide des Spinells am Gewicht des Katalysators zwischen 2 und 50 %, insbesondere zwischen 10 und 30 % beträgt.

12. Verfahren zur Herstellung eines Katalysators nach Anspruch 5 zur katalytischen Reduktion von NOx und/oder zur Oxidation von Kohlenwasserstoffen in Abgasen,
bei welchem Verfahren zur Herstellung des Katalysators ein Kupferoxid, Kobaltoxid, Zinkoxid und Aluminiumoxid aufweisender Spinell mit einem Zeolith als Trägermaterial vermischt und/oder bei welchem Verfahren zur Herstellung des Katalysators der Kupferoxid, Kobaltoxid, Zinkoxid und Aluminiumoxid aufweisende Spinell auf das zeolithische Trägermaterial aufgetragen wird.

13. Verfahren nach Anspruch 12,
**dadurch gekennzeichnet,**
**daß** eine aus den Metalloxiden des Spinells und aus einem zeolithischen Trägermaterial gebildete Mischung während des Vermischens miteinander verrieben werden.

14. Verfahren nach Anspruch 12,
**dadurch gekennzeichnet,**
**daß** eine aus den Metalloxiden des Spinells und aus einem zeolithischen Trägermaterial gebildete Mischung innig miteinander vermischt werden, wobei die Metalloxide mit einem Massenanteil zwischen 2 und 50%, insbesondere zwischen 12 und 30% eingesetzt werden.

15. Verfahren nach Anspruch 12,
**dadurch gekennzeichnet,**
**daß** Spinelle eingesetzt werden, bei denen das Cu teilweise gegen Co substituiert ist.

16. Verfahren nach Anspruch 12,
**dadurch gekennzeichnet,**
**daß** Spinelle eingesetzt werden, bei denen das Cu etwa zu gleichen Anteilen gegen Co substituiert ist.

17. Verfahren nach Anspruch 12,
**dadurch gekennzeichnet,**
**daß** Spinelle eingesetzt werden, bei denen Co etwa zum gleichen Anteil wie Cu substituiert ist, wobei die Summe des Anteils Co und des Anteils Cu etwa gleich 0,5 ist.

18. Verwendung eines Katalysators gemäß Anspruch 1 zur katalytischen NOx-Reduktion in Abgasen von Verbrennungsmotoren, insbesondere von Diesel- oder Magermixmotoren.

19. Verwendung eines Katalysators gemäß Anspruch 1 zur katalytischen NOx-Reduktion in Abgasen von Verbrennungskraftwerken.

20. Verwendung eines Katalysators gemäß Anspruch 1 zur katalytischen NOx-Reduktion in sauerstoffhaltigem Gas und bei Anwesenheit eines Reduktionsmittels.

## Claims

1. A catalyzer for the catalytic reduction of NOx and/or for the oxidation of hydrocarbons in exhaust gases with the catalyzer having a zeolite carrier material which is mixed with a spinel with the general chemical formula
Cu_{A}Co_{B}Zn_{C}Al_{D}O₄
where:
A + B + C + D = 3 and A > 0,B ≥ 0, C > 0 and D > 0.

2. A catalyzer in accordance with claim 1,
**characterised in that**
the catalyzer has a copper oxide, zinc oxide, aluminium oxide spinel with the chemical formula
Cu_{A}Zn_{C}Al_{D}O₄
where:
A + C + D = 3 and A > 0, C > 0 and D > 0.

3. A catalyzer in accordance with claim 1,
**characterised in that**
the catalyzer has a copper oxide, zinc oxide, aluminium oxide spinel with the chemical formula
Cu_{(1-c)}Zn_{C}Al₂O₄
where: 0 < C < 1.

4. A catalyzer in accordance with claim 1,
**characterised in that**
the catalyzer has a copper oxide, zinc oxide, aluminium oxide spinel with the chemical formula
Cu_{0.5}Zn_{0.5}Al₂O₄.

5. A catalyzer in accordance with claim 1,
**characterised in that**
the spinel in the catalyzer is a copper oxide, cobalt oxide, zinc oxide, aluminium oxide spinel with the chemical formula
Cu_{A}Co_{B}Zn_{c}Al_{D}O₄
where: A + B + C + D = 3 with
A > 0,B > 0,C > 0 and D > 0.

6. A catalyzer in accordance with claim 1,
**characterised in that**
the catalyzer is a copper oxide, cobalt oxide, zinc oxide, aluminium oxide spinel with the chemical formula
Cu_{[1-(B+C)]}Co_{B}Zn_{C}Al₂O₄
where: 0 < (B + C) < 1 with B > 0 and C > 0.

7. A catalyzer in accordance with claim 1,
**characterised in that**
the catalyzer is a copper oxide, cobalt oxide, zinc oxide, aluminium oxide spinel with the chemical formula
Cu_{[0.5-B)}Co_{B}Zn_{0.5}Al₂O₄
where: 0 < B < 0.5.

8. A catalyzer in accordance with claim 1,
**characterised in that**
the catalyzer is a copper oxide, cobalt oxide, zinc oxide, aluminium oxide spinel with the chemical formula
Cu_{0.25}Co_{0.25}Zn_{0.5}Al₂O₄.

9. A catalyzer in accordance with claim 1,
**characterised in that**
the spinel is granular, particularly powdery in form.

10. A catalyzer in accordance with claim 1,
**characterised in that**
the catalyzer is porous.

11. A catalyzer in accordance with claim 1,
**characterised in that**
the percentage of the metal oxides in the spinel in the weight of the catalyzer is between 2% and 50%, in particular between 10% and 30%.

12. A process for the manufacture of a catalyzer in accordance with claim 5 for the catalytic reduction of NOx and/or the oxidation of hydrocarbons in exhaust gases,
in which process for the manufacture of the catalyzer a spinel containing copper oxide, cobalt oxide, zinc oxide and aluminium oxide is mixed with a zeolite as the carrier material and/or in which process for the manufacture of the catalyzer the spinel containing copper oxide, cobalt oxide, zinc oxide and aluminium oxide is applied to the zeolite carrier material.

13. A process in accordance with claim 12,
**characterised in that**
a mixture formed from the metal oxides in the spinel and a zeolite carrier material is comminuted during mixing.

14. A process in accordance with claim 12,
**characterised in that**
a mixture formed from the metal oxides in the spinel and a zeolite carrier material is mixed homogeneously, with a percentage by mass of between 2% and 50%, in particular between 12% and 30% of metal oxides being used.

15. A process in accordance with claim 12,
**characterised in that**
spinels in which the Cu is partially replaced by Co are used.

16. A process in accordance with claim 12,
**characterised in that**
spinels in which the Cu is replaced by approximately the same proportion of Co are used.

17. A process in accordance with claim 12,
**characterised in that**
spinels in which Co is substituted in approximately the same proportion for the Cu are used with the sum of the percentage of Co and the percentage of Cu being approximately equal to 0.5.

18. The use of a catalyzer in accordance with claim 1 for catalytic NOx reduction in exhaust gases from combustion engines, in particular diesel and lean mix engines.

19. The use of a catalyzer in accordance with claim 1 for catalytic NOx reduction in exhaust gases from combustion power stations.

20. The use of a catalyzer in accordance with claim 1 for catalytic NOx reduction in oxygenous gas and in the presence of a reducing agent.

## Revendications

1. Catalyseur pour la réduction catalytique du NOx et/ou pour l'oxydation d'hydrocarbure dans les gaz d'échappement, où le catalyseur comprend un matériau support en une zéolite, laquelle est mélangée à un spinelle de formule chimique générale
Cu_{A}Co_{B}Zn_{C}Al_{D}O₄
dans laquelle
A + B + C + D = 3 et A > 0, B ≥ 0, C > 0 et D > 0.

2. Catalyseur selon la revendication 1, **caractérisé en ce que** le catalyseur est un spinelle d'oxyde de cuivre-oxyde de zinc-oxyde d'aluminium de formule chimique
Cu_{A}Zn_{C}Al_{D}O₄,
dans laquelle
A + C + D = 3, et A > 0, C > 0 et D > 0.

3. Catalyseur selon la revendication 1, **caractérisé en ce que** le catalyseur est un spinelle d'oxyde de cuivre-oxyde de zinc-oxyde d'aluminium de formule chimique
Cu_{(1-C)}-Zn_{C}Al₂O₄
dans laquelle 0 < C < 1.

4. Catalyseur selon la revendication 1, **caractérisé en ce que** le catalyseur est un spinelle d'oxyde de cuivre-oxyde de zinc-oxyde d'aluminium de formule chimique
Cu_{0,5}Zn_{0,5}Al₂O₄

5. Catalyseur selon la revendication 1, **caractérisé en ce que** le spinelle du catalyseur est un spinelle d'oxyde de cuivre-oxyde de cobalt-oxyde de zinc-oxyde d'aluminium de formule chimique
Cu_{A}Co_{B}Zn_{C}Al_{D}O₄
dans laquelle A + B + C + D = 3, avec A > 0, B > 0, C > 0 et D > 0.

6. Catalyseur selon la revendication 1, **caractérisé en ce que** le catalyseur contient un spinelle d'oxyde de cuivre-oxyde de cobalt-oxyde de zinc-oxyde d'aluminium de formule chimique
Cu_{[1-(B+C)]}Co_{B}Zn_{C}Al₂O₄
dans laquelle 0 < (B+C) < 1, avec B > 0 et C > 0.

7. Catalyseur selon la revendication 1, **caractérisé en ce que** le catalyseur comprend un spinelle d'oxyde de cuivre-oxyde de cobalt-oxyde de zinc-oxyde d'aluminium de formule chimique
Cu_{(0,5-B)}Co_{B}Zn_{0,5}Al₂O₄
dans laquelle 0 < B < 0,5.

8. Catalyseur selon la revendication 1, **caractérisé en ce que** le catalyseur comprend un spinelle d'oxyde de cuivre-oxyde de cobalt, oxyde de zinc-oxyde d'aluminium. de formule chimique
Cu_{0,25}Co_{0,25}Zn_{0,5}Al₂O₄

9. Catalyseur selon la revendication 1, **caractérisé en ce que** le spinelle se présente sous une forme granulaire, en particulier pulvérulente.

10. Catalyseur selon la revendication 1, **caractérisé en ce que** le catalyseur a une structure poreuse.

11. Catalyseur selon la revendication 1, **caractérisé en ce que** la proportion en pourcentage des oxydes métalliques du spinelle par rapport au poids du catalyseur est de 2 à 50 et en particulier de 2 à 30 %.

12. Procédé de fabrication d'un catalyseur selon la revendication 5 pour la réduction catalytique du NOx et/ou pour l'oxydation des hydrocarbures dans les gaz d'échap-pement, procédé de fabrication d'un catalyseur dans lequel on mélange à une zéolite servant de matériau support un spinelle comprenant de l'oxyde de cuivre, de l'oxyde de cobalt, de l'oxyde de zinc et de l'oxyde d'aluminium, et/ou procédé de fabrication d'un catalyseur dans lequel on applique sur le matériau support zéolitique un spinelle comprenant de l'oxyde de cuivre, de l'oxyde de cobalt, de l'oxyde de zinc et de l'oxyde d'aluminium.

13. Procédé selon la revendication 12, **caractérisé en ce que**, pendant leur mélange les uns avec les autres, on broie le mélange formé par les oxydes métalliques du spinelle et un matériau support zéolitique.

14. Procédé selon la revendication 12, **caractérisé en ce qu'**on mélange intimement un mélange formé à partir des oxydes métalliques du spinelle et un matériau support zéolitique, les oxydes métalliques étant utilisés selon une proportion en masse comprise entre 2 et 50 et en particulier entre 12 et 30 %.

15. Procédé selon la revendication 12, **caractérisé en ce qu'**on utilise des spinelles dans lesquels le Cu est partiellement remplacé par Co.

16. Procédé selon la revendication 12, **caractérisé en ce qu'**on utilise des spinelles dans lesquels le Cu est remplacé par du Co en des quantités approximativement égales.

17. Procédé selon la revendication 12, **caractérisé en ce qu'**on utilise des spinelles dans lesquels le Co est substitué approximativement en la même quantité que le Cu, la somme du Co et du Cu étant approximativement égale à 0,5.

18. Utilisation d'un catalyseur selon la revendication 1 pour la réduction catalytique du NOx dans les gaz d'échappement de moteurs à combustion interne, en particulier des moteurs diesel et à mélange pauvre.

19. Utilisation d'un catalyseur selon la revendication 1 pour la réduction catalytique du NOx dans les effluents gazeux des centrales à combustion interne.

20. Utilisation d'un catalyseur selon la revendication 1 pour la réduction catalytique du NOx dans un gaz contenant de l'oxygène et en présence d'un réducteur.
